# EUROPEAN PATENT APPLICATION

(11) **EP 3 962 190 A1**
(43) Date of publication of application: **02.03.2022**
(21) Application number: 20192965.0
(22) Date of filing: 26.08.2020
(51) Int. Cl.: H04W 72/00, H04B 1/713

(54) **METHOD FOR CONTROLLING DATA TRANSMISSION IN A RADIO COMMUNICATION SYSTEM**

(71) Applicant: THALES DIS AIS Deutschland GmbH, 81541 München (DE)
(72) Inventor: BREUER, Volker, 16727 Boetzow (DE); WENDLER, Ralf, 14612 Falkensee (DE); DENZIN, Florian, 10965 Berlin (DE)
(74) Representative: Grevin, Emmanuel

(57) **Abstract**

The present invention relates to a method for operating a base station transceiver of a cellular radio communication system in controlling transmission of a radio signal to a user equipment, the method comprising determining frequency-hopping control information that is indicative of a hopping-frequency set of frequency sub-bands of a downlink frequency band of a downlink channel of the cellular radio communication system, which are to be used for transmission of consecutive radio signal segments of the radio signal to the user equipment, and that is indicative of a hopping time order of the frequency sub-bands of the hopping frequency set, which is to be used for the transmission of the consecutive radio signal segments of the radio signal to the user equipment; wherein determining the frequency-hopping control information comprises ascertaining user-equipment hopping-limitation information that is indicative of one or more of the frequency sub-bands of the downlink frequency band that are to be excluded from the hopping-frequency set, and using the user-equipment hopping-limitation information in determining the hopping frequency set.

## Description

### FIELD OF THE INVENTION

The present invention relates to a method for operating a base station transceiver of a cellular radio communication system in controlling transmission of a radio signal to a user equipment, to a controller device for controlling transmission of a radio signal from a base station transceiver of a cellular radio communication system to a user equipment, to a base station transceiver for use in a cellular radio communication system, and to a method for operating a user equipment of a cellular radio communication system in controlling reception of a radio signal from a base station transceiver.

In the field of wireless communication networks, hopping schemes are frequently used for transmission of a radio signal from a base station transceiver to a user equipment. When the radio signal is transmitted using frequency hopping, frequency sub-bands of a downlink frequency band used for the transmission are frequently changed according to a hopping scheme known to both the base station transceiver and the user equipment to reduce the effect of sources of interference on the transmission. Different hopping schemes are already known in the prior art. Performing hopping based on a pre-known sequence has the advantage of avoiding instantaneous signalling during execution of hopping sequence.

### BACKGROUND OF THE INVENTION

WO 2018/073812 A1 describes a method in a wireless communication network comprises determining a frequency hopping sequence for communication between a wireless device and a network node. The frequency hopping sequence used is a function of a first hopping sequence and a second hopping sequence. The first hopping sequence has a first frequency step size and a first sequence length, and the second hopping sequence has a second frequency step size and a second sequence length. The first frequency step size is greater than the second frequency step size. Furthermore, the method of WO 2018/073812 A1 comprises communicating on frequencies selected according to the determined frequency hopping sequence.

### SUMMARY OF THE INVENTION

It is an objective of the present invention to provide an improved hopping scheme.

The objective of providing an improved hopping scheme is achieved, according to first aspect of the invention, by a method for operating a base station transceiver described in claim 1. In a second and third aspect, the invention is formed by a controller device for a base station transceiver, and a base station transceiver according to claim 12 and 15, respectively. In a fourth aspect, the invention is formed by a method for operating a user equipment according to claim 16.

In a fifth and sixth aspect, the invention is formed by a computer program for controlling a base station transceiver and a computer program for controlling a user equipment according to claims 21 and 22.

In the following, the method according to the first aspect of the invention will be described.

The method according to the first aspect of the invention is concerned with operating a base station transceiver of a cellular radio communication system in controlling transmission of a radio signal to a user equipment.

The method comprises determining frequency-hopping control information. The frequency-hopping control information is indicative of a hopping-frequency set of frequency sub-bands of a downlink frequency band of a downlink channel of the cellular radio communication system, which are to be used for transmission of consecutive radio signal segments of the radio signal to the user equipment. Furthermore, the frequency-hopping control information is indicative of a hopping time order of the frequency sub-bands of the hopping frequency set, which is to be used for the transmission of the consecutive radio signal segments of the radio signal to the user equipment.

According to the method of the first aspect, determining the frequency-hopping control information comprises
- ascertaining user-equipment hopping-limitation information that is indicative of one or more of the frequency sub-bands of the downlink frequency band that are to be excluded from the hopping-frequency set, and
- using the user-equipment hopping-limitation information in determining the hopping frequency set.

The invention is based on the recognition that hopping schemes are very efficient to reduce the effect of sources of interference on the transmission. Certain environments in which the base station transceiver and the user equipment are used contain sources of interference that affect transmissions at one of more frequencies. To reduce the effect of the sources of interference on the transmission, hopping schemes are used in which consecutive radio signal segments of the radio signal are transmitted according to a hopping time order using a plurality of frequency sub-bands of the downlink frequency band of the downlink channel of the cellular radio communication system.

Moreover, the invention comprises the recognition that the described positive effect of given hopping schemes can be improved by taking into account any limitation of the set of suitable frequency sub-bands that is individual limitations for a given user equipment.

Based on this recognition, the method of the present invention also comprises ascertaining user-equipment hopping-limitation information that is indicative of one or more of the frequency sub-bands of the downlink frequency band that are to be excluded from the hopping-frequency set, and using the user-equipment hopping-limitation information in determining the hopping frequency set.

For instance, besides the mentioned sources of interference caused by the environment, the reception performance can also suffer from internal sources of interference in the user equipment, also referred to as self-interference. Particularly due to miniaturization of devices, wireless receiver modules nowadays are in close proximity to other modules inside a compact casing of a user equipment. For example, DC-DC converters, in particular switched-mode converters, or memory modules can act as internal sources of interference. Effects of this kind are typically known on the side of the manufacturer of the user equipment to be present in operation of a given user equipment. The present invention makes such information available to the base station transceiver for the control of the hopping scheme to be used in communication with a given user equipment. In the present example of self-interference, therefore, the effect of internal sources of self-interference can be decreased by excluding those frequencies that due to such self-interference exhibit decreased reception performance from the hopping-frequency set, using the user-equipment hopping-limitation information. However, it is noted that the given example is non-limiting in the sense that any limitation known to apply for a given user equipment at the time of determining the frequency-hopping control information at the current location of the user equipment can be provided as user-equipment hopping-limitation information.

In the following, preferred embodiments of the method will be described.

In different embodiments, the base station transceiver ascertains the user-equipment hopping-limitation information from different sources. In a preferred embodiment of the method for operating a base station transceiver, ascertaining the user-equipment hopping-limitation information comprises receiving the user-equipment hopping-limitation information from the user equipment. This embodiment is particularly advantageous in that individual user-equipment hopping-limitation information is maintained directly at and obtained directly from the device it applies to. This avoids network-internal control communication for maintaining and ascertaining this information. As a result, less computational resources and/or storage recourses are required in the network.

In another preferred embodiment of the method, ascertaining the user-equipment hopping-limitation information comprises signalling to the user equipment minimum-reception-performance information for one or more of the frequency sub-bands, wherein the minimum-reception-performance information is indicative of a maximum error rate of reception at the user equipment, or any quantity similarly indicative of signal-quality information on the receiver side (RSSI, BER, etc.). This allows taking into account characteristics of the base station transceiver for transmitting the radio signal, such as a maximum coverage enhancement level, in determining the user-equipment hopping-limitation information. In a variant of this embodiment, therefore, this can be useful in that the hopping-limitation information received from the user equipment takes into account the minimum-reception-performance information: In other words, hopping-limitation information is received from the user equipment depending on the minimum-reception performance information. For example, if a certain level of required upper error rate threshold imposed by the minimum-reception-performance information cannot be met by the user equipment for a certain frequency sub-band, this frequency sub-band is dynamically added to the hopping limitation information.

In other embodiments, the base station uses pre-stored look-up tables to obtain the hopping-limitation information. For instance, ascertaining the user-equipment hopping limitation information comprises
- obtaining user-equipment type information from the user equipment in a control exchange with the user equipment, and
- accessing and searching a look-up table using the obtained user-equipment type information to retrieve the hopping-limitation information assigned to the user-equipment type information, or to retrieve a hopping-frequency set that takes into account the hopping-limitation information assigned to the user-equipment type information.

This embodiment is advantageous, because it maintains a lower amount of the control traffic related to information exchanged between user equipment and the base station transceiver in determining the user-equipment hopping limitation information.

Another embodiment of the method comprises the further step of additionally using the user-equipment hopping-limitation information in determining the hopping time order. This allows advanced hopping control schemes, for instance when using the same frequency sub-bands in parallel for wireless communication between the base station transceiver and different user equipment devices. The hopping time order can be controlled by the base station for the different user equipment devices to avoid using the same frequency sub-band at the same time for different user equipment devices, as further developed below for a group of embodiments.

In another preferred embodiment, determining the hopping frequency set, or determining the hopping time order, or determining the hopping frequency set and the hopping time order is performed additionally using bandwidth information indicative of a frequency bandwidth occupied by the individual frequency sub-bands, which are to be used for the transmission of the radio signal to the user equipment. Using the bandwidth information, the distance between the individual frequency sub-bands used for the transmission of the radio signal can be advantageously adjusted such to optimize a hopping gain achieved by assigning the frequency sub-bands used for the transmission, in particular with respect to a distance from frequencies covered by a common internal interferer.

In a further group of embodiments indicated above, the method further comprises using the determined frequency-hopping control information in determining further frequency-hopping control information for one or more additional parallel transmissions of radio signals from the base station transceiver to the user equipment. The further frequency-hopping control information comprises
- the hopping frequency set of the determined frequency-hopping control information, and
- a modified hopping time order assigned to the frequency sub-bands of the hopping frequency set, wherein modified hopping time order for each additional parallel transmission is a respective cyclically shifted version of the hopping time order of the determined frequency-hopping control information.

Using parallel transmissions from the base station transceiver to the user equipment within an a given assigned download band comprising the different frequency sub-bands of the base station transceiver according to this embodiment, better use of the transmission capacity of the download band in frequency space is made at a given time, and the amount of data transmitted to the user equipment in a given time span can be increased while at the same time observing the user equipment hopping-limitation information. Preferably, the frequency sub-bands used in this embodiment in the hopping scheme are all of equal bandwidth, so that the hopping schemes for the individual transmissions in shifted versions are particularly simple to control.

In yet another embodiment, the method further comprises
- using the determined frequency-hopping control information to determine scheduling control information for scheduling a transmission of the radio signal from the base station transceiver to the user equipment, and
- providing the determined scheduling control information for transmission to the user equipment in a control communication associated with the transmission of the radio signal to the user equipment.

Suitably, the frequency sub-bands comprised in the frequency-hopping control information are scheduled as one entity, i.e., as one scheduling information

In another preferred embodiment, the method further comprises the steps:
- obtaining coverage-enhancement-mode information associated with the user equipment, the coverage-enhancement-mode indicating whether or not the user equipment is being operated in a coverage-enhancement mode defined by a radio communication standard;
- performing the method only while the obtained coverage-enhancement-mode information indicates that the user equipment is being operated in a specific coverage-enhancement mode.

In yet another preferred embodiment, the method further comprises the steps:
- using the determined frequency-hopping control information in determining retransmission control information under a Hybrid Automated Repeat Request scheme, the retransmission control information thus including the frequency-hopping control information for use in controlling retransmissions of the radio signal from the base station transceiver to the user equipment in response to receiving one or more repeat requests from the user equipment; and
- providing the determined retransmission control information for transmission to the user equipment in a control communication.

This embodiment thus also includes retransmissions under the Hybrid Automated Repeat Request (HARQ) scheme in the hopping scheme, using the frequency-hopping control information determined based on the user-equipment hopping-limitation information.

In a further embodiment, the method comprises performing a handover of the user equipment from the base station transceiver to a second base station transceiver. In this embodiment the user-equipment hopping-limitation information is provided from the base station transceiver to the second base station transceiver. This allows continuing signal transmission in accordance with the user-equipment hopping-limitation even after a handover and avoided additional control communication between the user equipment and the second base station transceiver for enabling the UE-individual hopping scheme.

In variants of this embodiment, the base station transceiver, in the course of performing the handover, also provides the minimum-reception-performance information or the coverage enhancement mode information, or both sets of information, to the second base station transceiver. This further improves the handover experience for the user equipment.

The following description turns to the controller device for controlling transmission of a radio signal from a base station transceiver of a cellular radio communication system to a user equipment according to the second aspect of the invention.

The controller device comprises a hopping control unit configured to determine frequency-hopping control information that is indicative of a hopping-frequency set of frequency sub-bands of a downlink frequency band of a downlink channel of the cellular radio communication system, which are to be used for transmission of consecutive radio signal segments of the radio signal to the user equipment. Furthermore, the frequency-hopping control information is indicative of a hopping time order of the frequency sub-bands of the hopping frequency set, which is to be used for the transmission of the consecutive radio signal segments of the radio signal to the user equipment.

Moreover, the hopping control unit is configured
- to ascertain user-equipment hopping-limitation information that is indicative of one or more of the frequency sub-bands of the downlink frequency band that are to be excluded from the hopping-frequency set due to a perturbation of signal reception at the user equipment caused by self-interference, and
- to determine the hopping frequency set using the user-equipment hopping-limitation information.

The controller device shares the advantages of the method according to the first aspect of the invention. The controller device is in some embodiments implemented as a component to be integrated in a base station transceiver. In other embodiments, it is a stand-alone component for use as an separate device that is external to the base station transceiver.

In a preferred embodiment of the controller device, the hopping control unit is further configured
- to obtain coverage-enhancement-mode information associated with the user equipment, the coverage-enhancement-mode indicating whether or not the user equipment is being operated in a coverage-enhancement mode defined by a radio communication standard;
- to ascertain the user-equipment hopping-limitation information only while the obtained coverage-enhancement-mode information indicates that the user equipment is being operated in the coverage-enhancement mode; and
- to determine the hopping frequency set irrespective of the user-equipment hopping-limitation information while the obtained coverage-enhancement-mode information indicates that the user equipment is not being operated in the coverage-enhancement mode.

In another preferred embodiment of the controller device, the hopping control unit is further configured
- to use the determined frequency-hopping control information in determining retransmission control information under a Hybrid Automated Repeat Request scheme, the retransmission control information thus including the frequency-hopping control information for use in controlling retransmissions of the radio signal from the base station transceiver to the user equipment in response to receiving one or more repeat requests from the user equipment; and
- to provide the determined retransmission control information for transmission to the user equipment in a control communication.

According to a third aspect of the invention, a base station transceiver for use in a cellular radio communication system is provided. The base station transceiver comprises a controller device of the second aspect or one of its embodiments described above.

The base station transceiver shares the advantages described in the context of the method according to the first aspect of the invention.

According to a fourth aspect of the invention, a method for operating a user equipment of a cellular radio communication system is provided.

The method comprises receiving frequency-hopping control information that is indicative of a hopping-frequency set of frequency sub-bands of a downlink frequency band of a downlink channel of the cellular radio communication system, which are to be used for reception of consecutive radio signal segments of the radio signal by the user equipment. The frequency-hopping control information is indicative of a hopping time order of the frequency sub-bands of the hopping frequency set, which is to be used for the reception of the consecutive radio signal segments of the radio signal by the user equipment.

In a preferred embodiment of the method comprises the additional step of providing to the base station transceiver, in a control exchange with the base station transceiver before transmission of the radio signal by the base station transceiver, user-equipment hopping-limitation information that is indicative of one or more of frequency sub-bands of a downlink frequency band that are to be excluded from the hopping-frequency set.

In yet another embodiment, the method comprises the additional step of receiving from the base station transceiver, in a control exchange with the base station transceiver before transmission of the radio signal by the base station transceiver, user equipment minimum-reception-performance information for one or more of frequency sub-band, wherein the minimum-reception-performance information is indicative of a maximum error rate of reception at the user equipment.

In a further preferred embodiment, the method comprises the additional steps of
- providing to the base station transceiver coverage-enhancement-mode information associated with the user equipment, the coverage-enhancement-mode indicating whether or not the user equipment is being operated in a coverage-enhancement mode defined by a radio communication standard, and
- performing the method of the fourth aspect of the invention only while the coverage-enhancement-mode information indicates that the user equipment is being operated in the coverage-enhancement mode.

In yet another embodiment, the method comprises the additional steps of:
- receiving, in a control communication from the base station transceiver, retransmission control information comprising the frequency-hopping control information,
- controlling, using the frequency-hopping control information comprised by the retransmission control information, reception of one or more retransmissions of the radio signal from the base station transceiver to the user equipment in response to transmitting one or more repeat requests from the user equipment to the base station transceiver under a Hybrid Automated Repeat Request scheme.

According to a fifth aspect of the invention, a computer program for controlling a base station transceiver is claimed. The computer program comprises executable code for controlling a base station transceiver of a cellular radio communication system in controlling transmission of a radio signal to a user equipment according to a method of the first aspect of the invention. The computer program shares all the advantages of the method according to the first aspect of the invention.

According to a sixth aspect of the invention, a computer program for controlling a user equipment is claimed. The computer program comprises executable code for controlling a user equipment for use in a cellular radio communication system in controlling reception of a radio signal from a base station transceiver according to a method of the fourth aspect of the invention. The computer program shares all the advantages of the method according to the fourth aspect of the invention.

### BRIEF DESCRIPTION OF THE DRAWINGS

Further embodiments will be described in the following with reference to the enclosed drawings. In the drawings:
Fig. 1 a shows a flowchart of an embodiment of a method for operating a base station transceiver in controlling transmission of a radio signal to a user equipment according to the invention;
Fig. 1b shows an exemplary hopping scheme generated using the method illustrated in Fig. 1a;
Fig. 1c shows an exemplary illustration how self-interference affects receiver sensitivity of a given user equipment;
Fig. 2 shows a flowchart of an embodiment of a method for operating a base station transceiver and a user equipment in controlling transmission of a radio signal from the base station transceiver to the user equipment;
Fig. 3 shows a flowchart of a method 300, which is an alternative embodiment of the method 200 of Fig. 2;
Fig. 4a shows a flowchart of an embodiment of a method for determining further frequency-hopping control information for one or more additional parallel transmissions of radio signals from the base station transceiver to the user equipment;
Fig. 4b shows an exemplary hopping scheme generated using the method of Fig. 4a;
Fig. 4c shows an alternative exemplary hopping scheme generated using the method of Fig. 4a;
Fig. 5 shows a flowchart of a method, which is an alternative embodiment of the method of Fig. 2;
Fig. 6 shows a flowchart of a method, which is yet another alternative embodiment of the method of Fig. 2;
Fig. 7 shows a flowchart of a method for using frequency-hopping control information in a transmission in response to a Hybrid Automated Repeat Request;
Fig. 8 shows a flowchart of an embodiment of a method for performing a handover of a given user equipment from one base station transceiver to a next base station transceiver; and
Fig. 9 illustrates a base station transceiver 920 and a user equipment 910 according to the invention.

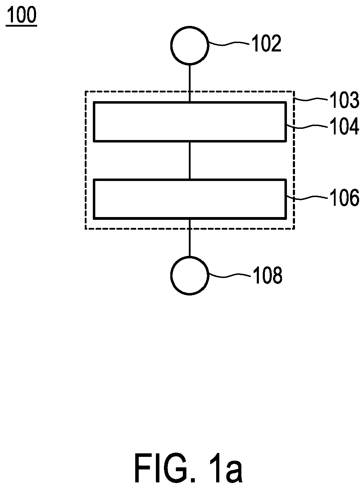

Fig. 1a shows a flowchart of an embodiment of a method 100 for operating a base station transceiver in controlling transmission of a radio signal to a user equipment according to the invention.

The base station transceiver and the user equipment are both part of a cellular radio communication system. The method starts with a terminator 102 and comprises an algorithm 103 to determine frequency-hopping control information. The frequency-hopping control information is indicative of a hopping-frequency set of frequency sub-bands of a downlink frequency band of a downlink channel of the cellular radio communication system, which are to be used for transmission of consecutive radio signal segments of the radio signal to the user equipment. Furthermore, the frequency-hopping control information is indicative of a hopping time order of the frequency sub-bands of the hopping-frequency set, which is to be used for the transmission of the consecutive radio signal segments of the radio signal to the user equipment.

The algorithm 103 comprises two steps 104 and 106. In step 104, user-equipment hopping-limitation information are ascertained that is indicative of one or more of the frequency sub-bands of the downlink frequency band that are to be excluded from the hopping-frequency set.

In the embodiment of the method 100 shown in Fig. 1a, the frequency sub-bands included in the hopping-frequency set are each indicated by a respective center frequency and a respective frequency sub-band width. For simplicity, it is assumed that all frequency sub-bands have the same width. However, this does not need to be the case under all circumstances. In other embodiments, at least one of the frequency sub-bands is of smaller width than the other frequency sub-bands, e.g. for sparing impacted frequency regions which could be accordingly used for other devices. In the following step 106, the hopping frequency set is determined based on the ascertained user-equipment hopping-limitation information.

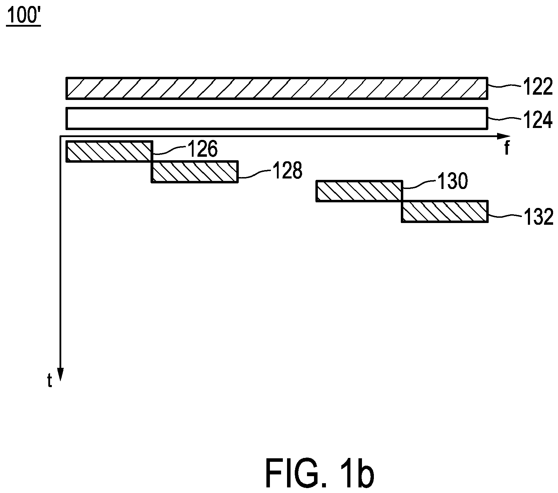

An example of a hopping scheme 100' generated with method 100 is shown in Fig. 1b and will be described in the following.

Fig. 1b shows an exemplary hopping scheme generated with method 100 illustrated in Fig. 1a.

In Fig. 1b, the frequency band 122 and 124 of the downlink channel of the base station transceiver and of the user equipment, respectively, are shown as a function of frequency indicated by a coordinate axis labelled "f".

Below the frequency band 122 and 124, the hopping frequency set and the hopping time order are illustrated, wherein the a coordinate axis labelled "t" indicates the hopping time order and the coordinate axis "f" the hopping frequency order.

In the example, the downlink frequency band is subdivided into five frequency sub-bands of which only four frequency sub-bands are used as indicated by the rectangles 126, 128, 130, and 132. As illustrated in Fig. 1b, at any point in time, only one frequency sub-band is used for transmission. The frequency sub-band for transmission is cyclically changed after a pre-determined period of time. The illustration only shows a single period. In a following period, the transmission is continued with lowest frequency sub-band and the described pattern is repeated.

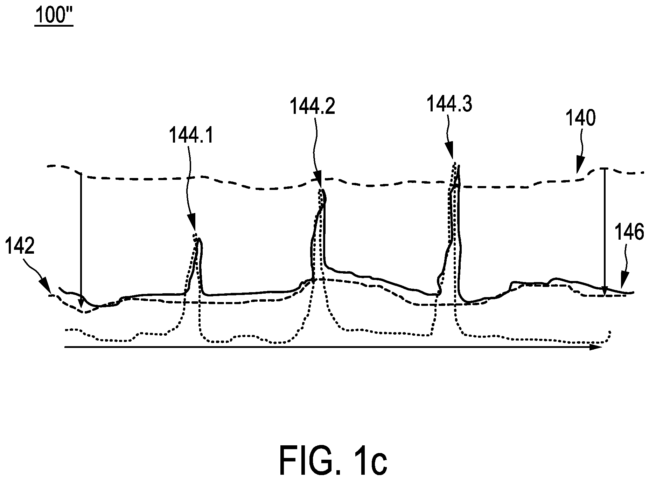

As illustrated in Fig. 1b, the frequency sub-band between the frequency sub-bands corresponding to rectangles 128 and 130 is never used in the hopping scheme. The left out frequency sub-band was indicated by the user-equipment hopping-limitation to be excluded for the transmission due to self-interference. Self-interference can be caused by functional modules, e.g. DC-DC converter or memory modules, situated in close proximity to a receiver module, which emit signals whose frequencies fall within the frequency band of the downlink channel. The effect of self-interference on the reception sensitivity will be described in the following with reference to Fig. 1c.

Fig. 1c shows an exemplary illustration 100" how self-interference affects receiver sensitivity of a given user equipment.

The exemplary illustration 100" shows noise levels of the given user equipment as a function of frequency denoted by a coordinate axis labelled "f", which is indicative of a receiver sensitivity of a receiver module of the given user equipment. The unsuppressed noise level of the given user equipment is indicated by an upper noise level 140. As is commonly known, the receiver sensitivity can be increased by accumulation, which leads to a lower noise level 142. The resulting increase in receiver sensitivity is a result of the fact that noise is uncorrelated in time and therefore gets reduced due to destructive interference in the accumulation process.

However, if noise due to self-interference is present, this reduction is not possible as illustrated using peaks 144.1, 144.2, and 144.3. Peaks 144.1, 144.2, and 144.3 in the illustration 100" are exemplary illustrations of noise due to self-interference in the frequency range of the downlink frequency band. As noise from self-interference is correlated in time. As a result, those peaks are unaffected by accumulation and remain in a cumulative noise level 146 of peaks 144.1-144.3 and uncorrelated noise after accumulation 142.

Consequently, self-interference has a large effect on receiver sensitivity and should be excluded from the set of hopping frequencies using the method of Fig. 1a.

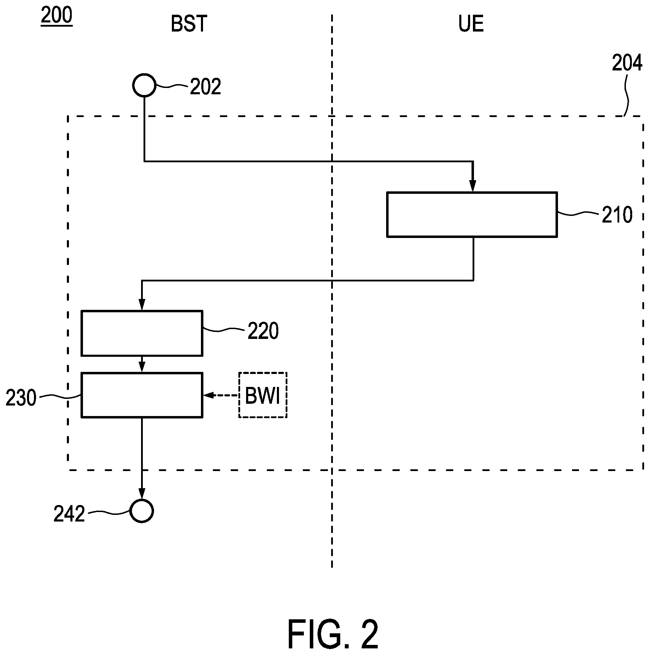

In the following, different embodiments of the method 100 will be described with reference to Figs. 2-8.

Fig. 2 shows a flowchart of an embodiment of a method 200 for operating a base station transceiver and a user equipment in controlling transmission of a radio signal from the base station transceiver to the user equipment.

While the flowchart of Fig. 1a only illustrates the steps of method 100 performed by the base station transceiver, Fig. 2 illustrates steps executed by both the base station transceiver and the user equipment. As a result, the flowchart is sub-divided by a dashed line into a left and a right side. The left side, also labeled "BST", indicates all those steps of the method that are executed by the base station transceiver while the right side, also labelled "UE", indicates all steps executed by the user equipment.

The method 200 starts with terminator 202 followed by an algorithm 204 for determining frequency-hopping control information that is indicative of the hopping-frequency set of frequency sub-bands and the hopping time order of the frequency sub-bands of the hopping frequency set, which is to be used for the transmission of the consecutive radio signal segments of the radio signal from the base station transceiver to the user equipment.

The algorithm 204 comprises a step 210, in the user equipment sends user-equipment hopping-limitation information in a control exchange to the base station transceiver. In a subsequent step 220, the user-equipment hopping-limitation information is received by the base station transceiver.

In a step 230, the user equipment processes the user-equipment hopping-limitation information for determining the hopping frequency set of the frequency-hopping control information. The method 200 stops with terminator 242.

In method 200, the user-equipment hopping limitation information is only used to determine the hopping frequency set. However, in other embodiments of the method, the base station alternatively or additionally uses the user-equipment hopping-limitation information also for determining the hopping time order.

In yet other embodiments of the method, the user equipment does not send the user-equipment hopping-limitation information to the base station transceiver, but rather user-equipment type information. User-equipment type information can be, for example, parts of the IMEI. In other embodiments, the user-equipment type information corresponds to a manufacturer and device type information, i.e. the TAC (Type Allocation Code).

In a consecutive step, the base station then accesses and searches a look-up table on a server using the obtained user-equipment type information to retrieve the hopping-limitation information assigned to the user-equipment type information. In an alternative embodiment, the base station transceiver accesses and searches a look-up table on a server using the obtained user-equipment type information to directly retrieve a hopping-frequency set that takes into account the hopping-limitation information assigned to the user-equipment type information.

In yet another embodiment of the method, the base station transceiver takes into account bandwidth information, labelled "BWI" in Fig. 2, in step 230. The bandwidth information is indicative of a frequency bandwidth occupied by the individual frequency sub-bands, which are to be used for the transmission of the radio signal to the user equipment. In those embodiments of the method, the bandwidth information is used to determine the hopping frequency set, or determining the hopping time order, or determining the hopping frequency set and the hopping time order.

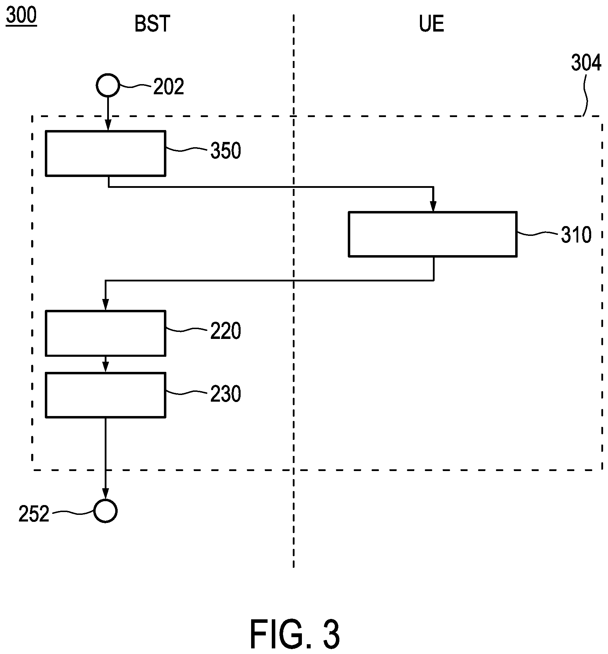

Fig. 3 shows a flowchart of a method 300, which is an alternative embodiment of the method 200 of Fig. 2.

Steps of the method 300 that are identical to those of the method 200 of Fig. 2 are labeled using the same reference signs. For an explanation of those features, the reader is referred to the description of Fig. 2. In the following, only those features that are unique to the method 300 will be explained.

As part of an algorithm 304 for determining the frequency-hopping control information, the method 300 comprises an additional step 350, in which the base station transceiver provides to the user equipment minimum-reception-performance information for the frequency sub-bands of the downlink frequency band, wherein the minimum-reception-performance information is indicative of a maximum error rate of reception at the user equipment.

In a step 310, the user equipment then determines the user-equipment hopping-limitation information based on the minimum-reception-performance information and provides the user-equipment hopping-limitation information to the base station transceiver.

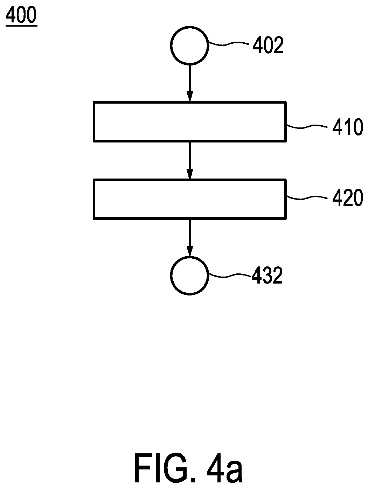

In the methods 100, 200, and 300 only one frequency sub-band of the downlink frequency band is used at any time for the transmission of the radio signal from the base station transceiver to the user equipment. In the following, an alternative method will be described with reference to Figs. 4a-4c in which multiple sub-bands are used in parallel for the transmission of the radio signal to two or more devices.

Fig. 4a shows a flowchart of an embodiment of a method for determining further frequency-hopping control information for one or more additional parallel transmissions of radio signals from the base station transceiver to the user equipment. The method is formulated from the point of view of the base station transceiver.

The method 400 starts with terminator 402 after which a first step 410 is executed. In step 410, the algorithm 103 of method 700 is executed for determining the frequency-hopping control information.

In a second step 420, the further frequency-hopping control information is determined, wherein the further frequency-hopping control information comprises the hopping frequency set of the determined frequency-hopping control information and a modified hopping time order assigned to the frequency sub-bands of the hopping frequency set. The modified hopping time order for each additional parallel transmission is a respective cyclically shifted version of the hopping time order of the determined frequency-hopping control information. The method 400 ends with terminator 432.

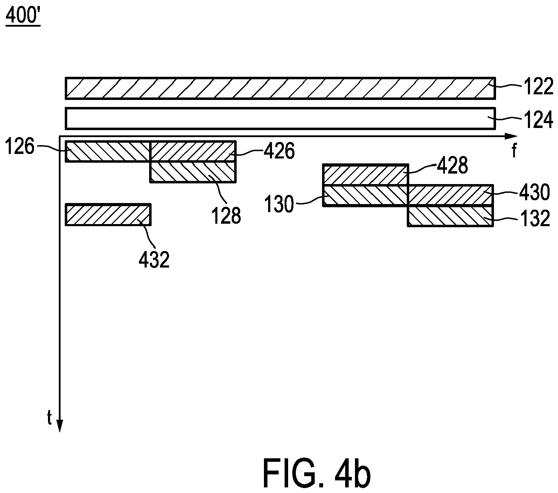

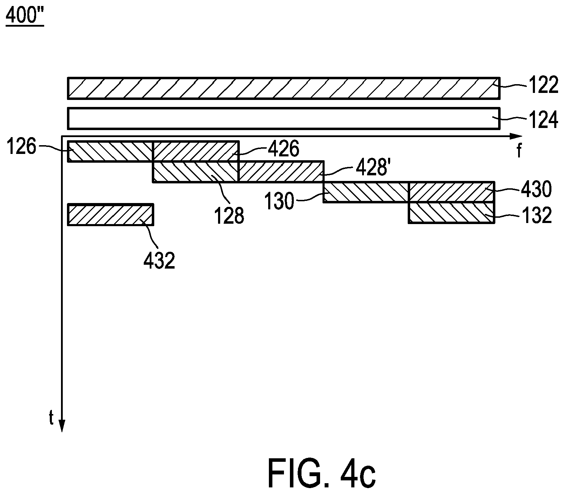

In the following, an exemplary hopping scheme generated with the method 400 will be described with reference to Fig. 4b and Fig. 4c.

Fig. 4b shows an exemplary hopping scheme 400' generated using the method of Fig. 4a.

The hopping scheme 400' shows a parallel transmission of a radio signal to two different devices that support an identical hopping-frequency set.

The hopping scheme 400' is depicted in the same manner as the hopping scheme 100' of Fig. 1b. In the upper part of Fig. 4b, the frequency band 122 and 124 of the downlink channel of the base station transceiver and of the user equipment, respectively, are shown as a function of frequency, wherein a coordinate axis labelled "f" indicates the frequency dependence.

In the lower part of Fig. 4b, the time and frequency dependence of the hopping scheme 400' is shown with the help of the coordinate axis "f" for the frequency dependence and a coordinate axis labeled "t" for the time dependence. The downlink frequency band is subdivided into five sub-bands. The transmission is performed using two parallel hopping schemes. A first hopping scheme is illustrated by the rectangles 126, 128, 130, and 132, which correspond to the hopping scheme 100' shown in Fig. 1b.

In addition, Fig. 4b shows a second hopping scheme illustrated by rectangles 426, 428, 430, and 432. The transmission of the first and the second hopping schemes is conducted using the same set of frequency sub-bands. However, the first and the second hopping schemes differ in the time-order in such a way that the first hopping scheme conducts a transmission using that frequency sub-band, which had been used in the previous time step by the second hopping scheme. In other words, the hopping time order of the second hopping scheme corresponds to a cyclically shifted hopping time order of the first hopping scheme.

A more complicated combination of hopping schemes is shown in Fig. 4c. The hopping scheme is also generated according to method 400 of Fig. 4a. However, in this case, also the hopping-frequency set is modified in addition to the hopping time order.Fig. 4c shows an alternative exemplary hopping scheme 400" generated using the method of Fig. 4a.

The hopping scheme 400" is identical to the hopping scheme 400' except for the rectangle 428 of the second hopping scheme, which is replaced by a rectangle 428'. The rectangle 428' indicates the usage of the frequency sub-band occupying a middle of the frequency band 122, which was previously unused, as part of the second hopping scheme. As a consequence, the frequency sub-band indicated by rectangle 130 is not used by the second hopping scheme.

A hopping scheme, such as the hopping scheme of Fig. 4c, that are not only based on a different hopping time order, but are also based on a different hopping-frequency set are particularly advantageous when the devices receiving the parallel transmission support different frequency sub-bands due to, e.g. different sources of internal interference.

The methods previously described include only those steps required for determining the frequency-hopping control information. In the following, a method will be described that includes additional steps for preparing the transmission of the radio signal.

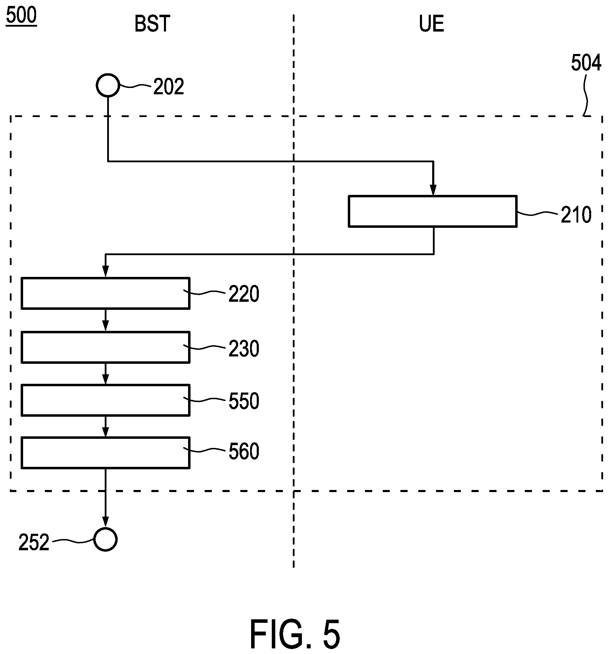

Fig. 5 shows shows a flowchart of a method 500, which is an alternative embodiment of the method 200 of Fig. 2.

Steps of the method 500 that are identical to those of the method 200 of Fig. 2 are labeled using the same reference signs. For an explanation of those features, the reader is referred to the description of Fig. 2. In the following, only those features that are unique to the method 500 will be explained.

As part of an algorithm 504 for determining the frequency-hopping control information, the method 500 comprises additional steps 550 and 560.

In the step 550, the base station transceiver uses the determined frequency-hopping control information to determine scheduling control information for scheduling a transmission of the radio signal from the base station transceiver to the user equipment. The scheduling control information are required so that the user equipment knows which frequency sub-bands to listen to for the transmission of the radio signal.

In the consecutive step 560, the base station transceiver provides the determined scheduling control information for transmission to the user equipment in a control communication associated with the transmission of the radio signal to the user equipment.

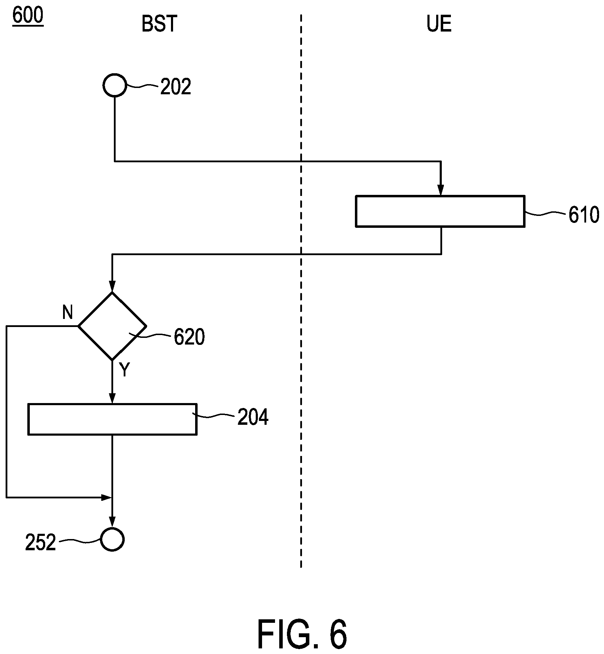

In certain circumstances, it is advantageous to only use user-equipment hopping-limitation information, when the user equipment is operated in a coverage enhancement mode. Such a method will be described in the following with reference to Fig. 6.

Fig. 6 shows a flowchart of a method 600, which is yet another alternative embodiment of the method of Fig. 2.

Steps of the method 600 that are identical to those of the method 200 of Fig. 2 are labeled using the same reference signs. For an explanation of those features, the reader is referred to the description of Fig. 2. In the following, only those features that are unique to the method 600 will be explained.

Before the execution of the algorithm 204, the base station transceiver verifies in a step 620 whether the user equipment operates in a coverage enhancement mode. To this end, the user equipment provides to the base station transceiver in a step 610 coverage-enhancement-mode information indicative of whether or not the user equipment is being operated in a coverage-enhancement mode defined by a radio communication standard.

If the user equipment is operated in a coverage enhancement mode, the base station transceiver uses the algorithm 204 for the transmission of the radio signal to the user equipment (indicated by a branch marked with "Y" in Fig. 6). Coverage enhancement mode in this example includes the CEmodeA and the CEmodeB for Cat-M devices and CElevel 1 to CElevel 3 for NB-loT devices.

Otherwise, the base station transceiver uses a standard hopping algorithm for the transmission of the radio signal to the user equipment (indicated by a branch marked with "N" in Fig. 6).

In an alternative embodiment of the method 600, the user equipment provides information indicative of which coverage enhancement the user equipment is using. In this embodiment, the algorithm 204 is only executed if the user equipment uses a pre-determined coverage enhancement mode.

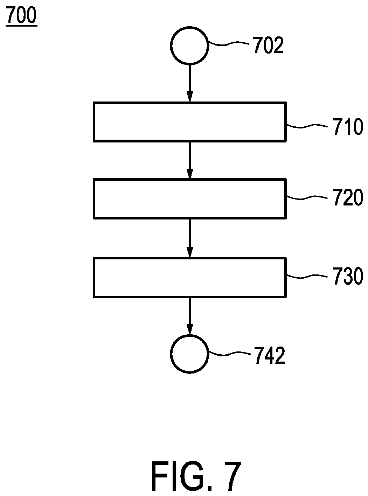

Besides for a standard transmission of a radio signal, the above described methods can also be used for transmission of a radio signal in response to a Hybrid Automated Repeat Request. An embodiment of such a method is described in the following with reference to Fig. 7.

Fig. 7 shows a flowchart of a method 700 for using frequency-hopping control information in a transmission in response to a Hybrid Automated Repeat Request. The method 700 is formulated from the point of view of the base station transceiver. Steps taken by the user equipment are only implicitly referred to.

The method 700 start with a terminator 702 and is executed in response to receiving one or more repeat requests from a given user equipment.

In a first step 710 of the method 700, the algorithm 103 of method 100 is used for determining the frequency-hopping control information.

In a second step 720, the frequency-hopping control information are used in determining retransmission control information under a Hybrid Automated Repeat Request scheme.

In a final step 730 of the method 700, the base station providing the determined retransmission control information for transmission to the user equipment in a control communication. The method 700 ends with terminator 742.

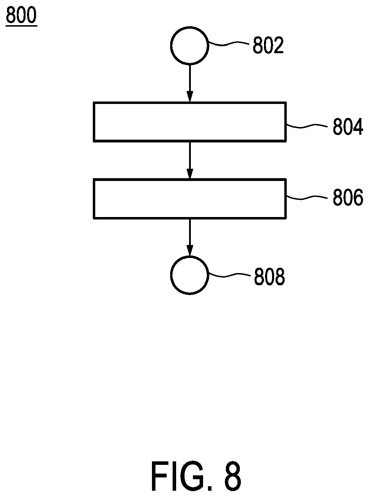

In case of a handover of the user equipment from one base station transceiver to a next base station transceiver, it is advantageous to pass the frequency-hopping control information from the base station transceiver to the next base station transceiver. Such a method will be described in the following with reference to Fig. 8.

Fig. 8 shows a flowchart of a method 800 for performing a handover of a given user equipment from one base station transceiver to a next base station transceiver.

The method 800 starts with a terminator 802. In a first step 804, the algorithm 103 of method 100 is executed to determine the frequency-hopping control information.

In a subsequent step 806, the base station transceiver transfers the user-equipment hopping-limitation information to the next base station transceiver in case of a handover. This method is particularly advantageous for an intra-frequency handover.

In alternative embodiments of the method 800, the algorithm 802 also comprises a step for transferring information about the control enhancement mode used by the user equipment. In yet other embodiments of the method 800, the minimum-reception-performance information signalled to the user equipment by the base station transceiver for determining the user-equipment hopping-limitation information is also transferred to the next base station transceiver.

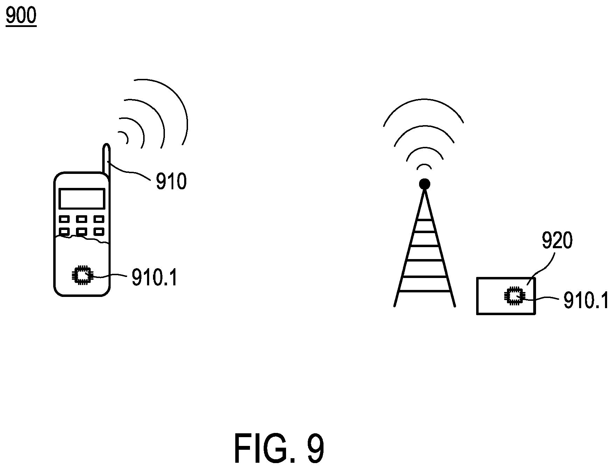

Finally, a base station transceiver and a user equipment configured to execute one of the methods described above are described with reference to Fig. 9.

Fig. 9 illustrates a base station transceiver 920 and a user equipment 910 according to the invention.

The user equipment in the example of Fig. 9 is a cell phone 910 that communicates with a base station transceiver 920 depicted by a radio signal tower, which are both part of a cellular radio communication system 900.

The base station transceiver 920 comprises a controller device 920.1 comprising a hopping control unit. The hopping control unit is configured to determine frequency-hopping control information that is indicative of a hopping-frequency set of frequency sub-bands of a downlink frequency band of a downlink channel of the cellular radio communication system, which are to be used for transmission of consecutive radio signal segments of a radio signal to the user equipment. Furthermore, the frequency-hopping control information is indicative of a hopping time order of the frequency sub-bands of the hopping frequency set, which is to be used for the transmission of the consecutive radio signal segments of the radio signal to the user equipment.

In particular, the hopping control unit is configured to ascertain user-equipment hopping-limitation information that is indicative of one or more of the frequency sub-bands of the downlink frequency band that are to be excluded from the hopping-frequency set due to a perturbation of signal reception at the user equipment caused by self-interference and to determine the hopping frequency set using the user-equipment hopping-limitation information. In the example depicted in Fig. 9, the ascertaining of the user-equipment hopping limitation information is performed by requesting the cell phone 910 to provide the user-equipment hopping limitation information in a control exchange before the transmission of the radio signal.

The cell phone 910 comprises a controller device 910.1 with a hopping control unit, which is configured to provide to the base station transceiver 920 the user-equipment frequency-limitation information and to subsequently receive the frequency-hopping control information from the base station 920.

## Claims

1. A method for operating a base station transceiver of a cellular radio communication system in controlling transmission of a radio signal to a user equipment, the method comprising
- determining frequency-hopping control information that is indicative of a hopping-frequency set of frequency sub-bands of a downlink frequency band of a downlink channel of the cellular radio communication system, which are to be used for transmission of consecutive radio signal segments of the radio signal to the user equipment, and that is indicative of a hopping time order of the frequency sub-bands of the hopping frequency set, which is to be used for the transmission of the consecutive radio signal segments of the radio signal to the user equipment; wherein
- determining the frequency-hopping control information comprises
- ascertaining user-equipment hopping-limitation information that is indicative of one or more of the frequency sub-bands of the downlink frequency band that are to be excluded from the hopping-frequency set, and
- using the user-equipment hopping-limitation information in determining the hopping frequency set.

2. The method of claim 1, wherein ascertaining the user-equipment hopping-limitation information comprises receiving the user-equipment hopping-limitation information from the user equipment.

3. The method of claim 1 or 2, wherein ascertaining the user-equipment hopping-limitation information comprises signalling to the user equipment minimum-reception-performance information for one or more of frequency sub-band, wherein the minimum-reception-performance information is indicative of a maximum error rate of reception at the user equipment.

4. The method of claim 1, wherein ascertaining the user-equipment hopping limitation information comprises
- obtaining user-equipment type information from the user equipment in a control exchange with the user equipment, and
- accessing and searching a look-up table using the obtained user-equipment type information to retrieve the hopping-limitation information assigned to the user-equipment type information, or to retrieve a hopping-frequency set that takes into account the hopping-limitation information assigned to the user-equipment type information.

5. The method of one of the preceding claims, further comprising
- additionally using the user-equipment hopping-limitation information in determining the hopping time order.

6. The method of any of the preceding claims, wherein
- determining the hopping frequency set, or determining the hopping time order, or determining the hopping frequency set and the hopping time order is performed additionally using bandwidth information indicative of a frequency bandwidth occupied by the individual frequency sub-bands, which are to be used for the transmission of the radio signal to the user equipment.

7. The method of one of the preceding claims, further comprising
- using the determined frequency-hopping control information in determining further frequency-hopping control information for one or more additional parallel transmissions of radio signals from the base station transceiver to the user equipment; wherein
- the further frequency-hopping control information comprises
- the hopping frequency set of the determined frequency-hopping control information, and
- a modified hopping time order assigned to the frequency sub-bands of the hopping frequency set, wherein modified hopping time order for each additional parallel transmission is a respective cyclically shifted version of the hopping time order of the determined frequency-hopping control information.

8. The method of one of the preceding claims, further comprising
- using the determined frequency-hopping control information to determine scheduling control information for scheduling a transmission of the radio signal from the base station transceiver to the user equipment; and
- providing the determined scheduling control information for transmission to the user equipment in a control communication associated with the transmission of the radio signal to the user equipment.

9. The method of one of the preceding claims, further comprising
- obtaining coverage-enhancement-mode information associated with the user equipment, the coverage-enhancement-mode indicating whether or not the user equipment is being operated in a coverage-enhancement mode defined by a radio communication standard;
- performing the method of claim 1 only while the obtained coverage-enhancement-mode information indicates that the user equipment is being operated in a specific coverage-enhancement mode.

10. The method of one of the preceding claims, further comprising
- using the determined frequency-hopping control information in determining retransmission control information under a Hybrid Automated Repeat Request scheme, the retransmission control information thus including the frequency-hopping control information for use in controlling retransmissions of the radio signal from the base station transceiver to the user equipment in response to receiving one or more repeat requests from the user equipment; and
- providing the determined retransmission control information for transmission to the user equipment in a control communication.

11. The method of one of the preceding claims, wherein
- performing a handover of the user equipment from the base station transceiver to a second base station transceiver comprises transferring the user-equipment hopping-limitation information from the base station transceiver to the second base station transceiver.

12. A controller device for controlling transmission of a radio signal from a base station transceiver of a cellular radio communication system to a user equipment, the controller device comprising
- a hopping control unit configured to determine frequency-hopping control information that is indicative of a hopping-frequency set of frequency sub-bands of a downlink frequency band of a downlink channel of the cellular radio communication system, which are to be used for transmission of consecutive radio signal segments of the radio signal to the user equipment, and that is indicative of a hopping time order of the frequency sub-bands of the hopping frequency set, which is to be used for the transmission of the consecutive radio signal segments of the radio signal to the user equipment; wherein
- the hopping control unit is configured
- to ascertain user-equipment hopping-limitation information that is indicative of one or more of the frequency sub-bands of the downlink frequency band that are to be excluded from the hopping-frequency set due to a perturbation of signal reception at the user equipment caused by self-interference, and
- to determine the hopping frequency set using the user-equipment hopping-limitation information.

13. The controller device of claim 12, wherein the hopping control unit is further configured
- to obtain coverage-enhancement-mode information associated with the user equipment, the coverage-enhancement-mode indicating whether or not the user equipment is being operated in a coverage-enhancement mode defined by a radio communication standard;
- to ascertain the user-equipment hopping-limitation information only while the obtained coverage-enhancement-mode information indicates that the user equipment is being operated in the coverage-enhancement mode; and
- to determine the hopping frequency set irrespective of the user-equipment hopping-limitation information while the obtained coverage-enhancement-mode information indicates that the user equipment is not being operated in the coverage-enhancement mode.

14. The controller device of claim 12 or 13, wherein the hopping control unit is further configured
- to use the determined frequency-hopping control information in determining retransmission control information under a Hybrid Automated Repeat Request scheme, the retransmission control information thus including the frequency-hopping control information for use in controlling retransmissions of the radio signal from the base station transceiver to the user equipment in response to receiving one or more repeat requests from the user equipment; and
- to provide the determined retransmission control information for transmission to the user equipment in a control communication.

15. A base station transceiver for use in a cellular radio communication system, the base station transceiver comprising a controller device of one of the claims 12 to 14.

16. A computer program comprising executable code for controlling a base station transceiver of a cellular radio communication system in controlling transmission of a radio signal to a user equipment according to a method of claim 1.
